# FASCICULE DE BREVET EUROPEEN

(11) **EP 0 661 429 B1**
(45) Date de publication et mention de la délivrance du brevet: **30.10.1996**
(21) Numéro de dépôt: 94402603.8
(22) Date de dépôt: 16.11.1994
(51) Int. Cl.: F02D 19/12, F02M 25/00

(54) **Procédé et dispositif de dosage variable d'additif de régénération pour filtre à particules**
Verfahren und Vorrichtung zur einstellbaren Dosierung eines Zusatzmittels zur Regenerierung für Partikelfilter
Method and device for variable dosing an additive for regeneration of a particulate filter

(30) Priorité: 30.12.1993 FR 9315932
(43) Date de publication de la demande: 05.07.1995
(73) Titulaire: AUTOMOBILES PEUGEOT, 75116 Paris (FR); AUTOMOBILES CITROEN, 92200 Neuilly-sur-Seine (FR)
(72) Inventeur: Follain, Luc, F-78450 Villepreux (FR)
(74) Mandataire: Bouget, Lucien

(56) Documents cités:
- EP-A- 0 488 831
- FR-A- 2 668 203
- PATENT ABSTRACTS OF JAPAN vol. 11, no. 225 (M-609) 22 Juillet 1987 & JP-A-62 038 816
- PATENT ABSTRACTS OF JAPAN vol. 11, no. 333 (M-637) 30 Octobre 1987 & JP-A-62 113 856
- PATENT ABSTRACTS OF JAPAN vol. 10, no. 331 (M-533) 11 Novembre 1986 & JP-A-61 135 917

## Description

L'invention concerne un procédé et un dispositif de dosage automatique à plusieurs niveaux successifs d'un additif de régénération pour filtre à particules dans le réservoir de carburant d'un véhicule automobile.

Les gaz d'échappement des moteurs Diesel qui utilisent du gazole comme carburant renferment à la fois des polluants gazeux tels que des hydrocarbures imbrûlés et des oxydes d'azote ou de carbone, ainsi que des polluants solides qui sont principalement constitués par des particules de suies. Les normes anti-pollution appliquées aux moteurs Diesel vont nécessiter, dans un avenir plus ou moins proche, l'élimination quasi-totale des émissions de particules de suies dans les gaz d'échappement de ces moteurs.

Afin d'assurer l'élimination de ces particules de suies, un post-traitement des gaz d'échappement utilisant un filtre à particules est nécessaire.

Un tel filtre à particules est installé dans la ligne d'échappement du moteur et comporte des éléments de filtration en matière céramique poreuse qui sont traversés par les gaz d'échappement et qui permettent de retenir les particules solides en suspension dans ces gaz afin d'obtenir un gaz épuré en sortie.

Au cours du fonctionnement du moteur, les éléments de filtration se chargent de particules de suies et se colmatent progressivement. Le décolmatage des éléments de filtration peut être obtenu en faisant brûler les suies déposées sur ces éléments, lors de l'utilisation du moteur.

Ces suies, en présence d'oxygène, brûlent à des températures de l'ordre de 550 à 600°. De tels niveaux thermiques ne sont que rarement atteints par les gaz d'échappement d'un moteur Diesel d'un véhicule de tourisme. Il est par conséquent nécessaire de favoriser le début de la régénération des éléments de filtration, par l'ajout dans le carburant d'un additif permettant d'abaisser la température de combustion des suies.

Ces additifs sont généralement constitués par des composés organo-métalliques qui, mélangés dans des proportions déterminées au gazole, suivent le circuit de ce gazole. Ils sont ainsi injectés dans la chambre de combustion, par la pompe d'injection et se retrouvent dans les gaz d'échappement.

La présence de ces additifs dans le filtre à particules où ils sont mélangés intimement avec les particules de suies, leur permet de jouer un rôle catalytique lors de la combustion des particules de suie et d'abaisser les températures d'inflammation des suies aux environs de 400 à 550°.

Pour jouer de manière correcte leur rôle de catalyseur, ces additifs doivent être mélangés de manière homogène au gazole utilisé comme carburant.

Les solutions connues à ce jour ont envisagé de mélanger ces additifs au gazole, à l'issue du processus industriel d'obtention du carburant, dans les usines pétrolières productrices. Le gazole renfermant les additifs de régénération des filtres à particules serait alors vendu à la pompe et constituerait un produit particulier, dans le cadre de la vente au détail des carburants.

Une autre solution connue est décrite dans la demande de brevet français déposée le 23 octobre 1990 et publiée sous le numéro 2.668.203. Il s'agit d'un système de dosage d'additif indépendant rapporté sur le véhicule, afin de maintenir à un niveau de concentration constant l'additif contenu dans le carburant du réservoir de ce véhicule, de manière automatique.

Lors de leur passage dans la chambre de combustion du moteur, les additifs sous forme d'organo-métalliques se transforment en particules d'oxydes métalliques intimement mêlées aux particules de suie.

Du fait de leur taille, les particules d'oxydes métalliques entraînées par les gaz d'échappement du moteur restent dans le filtre et s'y accumulent peu à peu en colmatant le filtre.

L'inconvénient des systèmes de dosage connus est qu'ils introduisent de manière invariable dans le temps des quantités excessives d'additifs dans le carburant sans tenir compte de paramètres d'utilisation du véhicule ou du filtre, ce qui aboutit à un colmatage rapide.

Dans le JP-A-62038816, on propose d'augmenter la concentration de l'additif dans le carburant, lorsque la valeur cumulée du nombre de tours du moteur franchit une valeur de seuil. Un tel procédé de réglage de la concentration du carburant ne permet pas d'éviter d'introduire dans le carburant des quantités excessives d'additif, après un certain temps de fonctionnement du véhicule depuis sa mise en oeuvre.

Le but de l'invention est donc de proposer un procédé d'introduction automatique d'un additif en quantités dosées dans le carburant d'un moteur à allumage par compression d'un véhicule automobile pour maintenir la concentration de l'additif dans le carburant à une valeur de consigne, dans lequel on fait varier au cours du temps la valeur de consigne en fonction d'au moins un paramètre représentatif de l'utilisation du véhicule depuis la date de mise en service du véhicule ou d'un filtre à particules placé sur la ligne d'échappement du moteur, ce procédé permettant de limiter les quantités d'additifs injectées dans le carburant et de retarder le moment où le filtre sera colmaté par les oxydes métalliques ou même d'éviter le colmatage du filtre pendant toute la durée de vie du véhicule.

A cet effet, la valeur de consigne est fixée successivement à une première valeur tant que le paramètre représentatif de l'utilisation du véhicule n'a pas franchi une valeur de seuil puis à une seconde valeur inférieure à la première valeur, lorsque le paramètre a franchi la valeur de seuil, afin de limiter la quantité d'additifs injectés dans le carburant et d'améliorer les conditions de fonctionnement du filtre à particules..

La figure 1 est une vue schématique montrant un dispositif d'introduction d'additifs en quantités dosées variables dans le temps.

La figure 2 montre une stratégie de dosage d'additif selon l'invention.

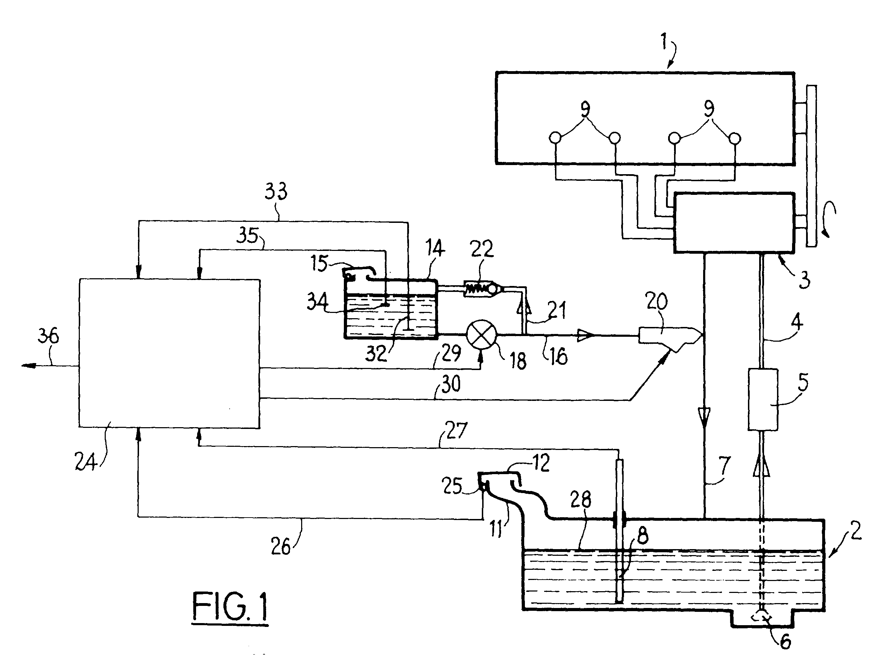

Sur la figure 1 on voit le moteur Diesel 1 d'un véhicule automobile qui est alimenté en gazole, à partir d'un réservoir 2, par l'intermédiaire d'une pompe d'injection 3.

La pompe d'injection est reliée au réservoir 2 par une conduite d'aspiration 4 sur laquelle est intercalé un filtre 5. La conduite d'aspiration 4 comporte une partie d'extrémité opposée à la pompe 3 qui est plongée à l'intérieur du réservoir 2 pour déboucher, à sa partie inférieure, sous la forme d'une crépine d'aspiration.

La pompe d'injection 3 est également reliée au réservoir de gazole 2, par l'intermédiaire d'une conduite de retour 7 permettant de renvoyer dans le réservoir 2 les quantités de gazole excédentaires aspirées par la pompe qui n'ont pas été injectées dans les cylindres du moteur 1.

La pompe d'injection 3 est reliée aux cylindres du moteur par des conduites assurant chacune l'alimentation d'un injecteur 9 associé à un cylindre du moteur.

Le réservoir 2 est équipé d'une jauge de niveau 8 permettant de déterminer précisément la position du niveau supérieur du gazole dans le réservoir 2.

Le réservoir 2 comporte une tubulure de remplissage 11 débouchant dans la partie supérieure du réservoir 2 et équipée d'un bouchon de fermeture 12.

La ligne d'échappement du véhicule dont la propulsion est assurée par le moteur Diesel comporte un filtre à particules non représenté permettant d'arrêter les particules de suies formées dans les gaz d'échappement du moteur.

Selon l'invention, le véhicule comporte un réservoir d'additif 14 muni d'un bouchon de remplissage 15 destiné à contenir un additif en quantités dosées qui peut être constitué par un ou plusieurs composés organo-métalliques en solution dans un solvant liquide. Une conduite d'injection d'additif liquide 16 est reliée au réservoir 14, au voisinage de sa partie inférieure. Une pompe de dosage 18 est intercalée sur la conduite 16 qui est reliée, à son extrémité opposée au réservoir 14, à un injecteur 20 débouchant dans la conduite de retour 7 de la pompe d'injection 3 du moteur.

Une conduite de retour 21 communiquant avec la conduite d'injection 16 en aval de la pompe 18 est reliée à la partie supérieure du réservoir d'additif 14 à un régulateur de pression 22 constitué par un clapet à billes comportant un ressort de tarage qui est intercalé sur la conduite de retour 21.

Le dispositif d'introduction automatique d'additif suivant l'invention comporte un boîtier électronique de commande 24 intégré au véhicule permettant d'assurer toutes les fonctions de réglage et de surveillance de l'introduction d'additif en quantités dosées en fonction de l'utilisation du véhicule.

Un contacteur électrique 25, associé au bouchon 12 de fermeture du réservoir 2 et relié au boîtier électronique 24 par un câble électrique 26, permet de transmettre automatiquement au boîtier 24, un signal électrique d'ouverture lorsqu'on réalise l'ouverture du bouchon 12, préalablement au réapprovisionnement du réservoir 2 en carburant.

Le contacteur 25 peut être réalisé avantageusement sous une forme identique à un contacteur utilisé pour détecter l'ouverture d'une porte ou pour provoquer l'allumage d'une lampe-témoin, lors de l'ouverture de la porte.

La jauge de niveau 8 est reliée par un câble électrique 27 au boîtier 24, de manière à transmettre au boîtier 24, un signal électrique représentatif du niveau de carburant 28 à l'intérieur du réservoir 2.

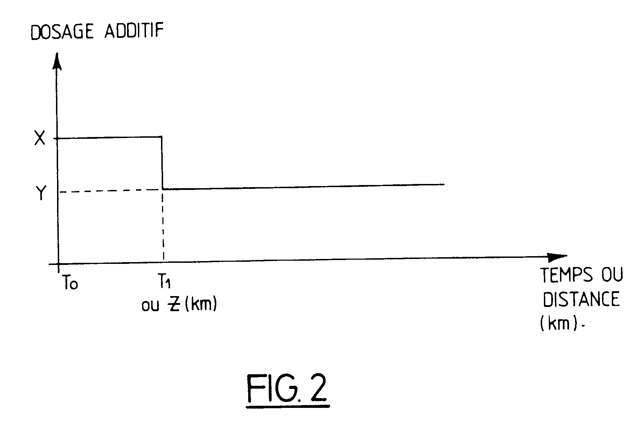

Le boîtier électronique 24 est relié par des câbles électriques 29 et 30 respectivement, à la pompe 18 et à l'injecteur 20, de manière à transmettre à ces éléments du dispositif d'introduction d'additif, un signal de commande assurant une injection d'additif en quantités dosées dans le conduit de retour 7 relié au réservoir 2, dans les conditions qui seront décrites plus loin, en regard de la figure 2.

Une jauge de niveau 32 reliée au boîtier 24 par un câble électrique 33 permet de transmettre au boîtier 24, un signal électrique lorsque le niveau d'additif dans le réservoir 14 est parvenu dans une position minimale voisine du fond du réservoir 14.

Une sonde de température 34 permet de transmettre au boîtier 24, par l'intermédiaire d'un câble électrique 35, un signal représentatif de la température de l'additif liquide à l'intérieur du réservoir 14.

Le boîtier 24 comporte une sortie 36 constituée par un câble électrique relié à un voyant qui peut être situé de manière avantageuse dans l'habitacle du véhicule automobile et dont l'allumage est obtenu lorsque le niveau d'additif détecté par la jauge 32 dans le réservoir 14 est parvenu dans la position correspondant au niveau minimal voisin du fond du réservoir 14.

L'allumage du voyant indique à l'utilisateur qu'il est nécessaire d'effectuer le réapprovisionnement du réservoir d'additif 14.

Certains éléments du dispositif d'introduction d'additif suivant l'invention peuvent être constitués par des éléments utilisés de manière classique pour la construction des moteurs de véhicule automobile et de leurs organes de commande.

C'est ainsi que l'ensemble d'injection d'additif comprenant la pompe 18, le régulateur de pression 22 et éventuellement l'injecteur 20 peut être constitué par un dispositif d'injection d'essence tel qu'utilisé sur les véhicules automobiles comportant un moteur à injection.

On va maintenant décrire le fonctionnement du dispositif suivant l'invention représenté à la figure 1 suivant une stratégie de dosage d'additif variable dans le temps schématisée à la figure 2.

La figure 2 montre à titre d'exemple que la stratégie de dosage comporte ici deux paliers. A partir d'un instant T₀ pris comme origine par le boîtier 24, on effectue des injections d'additif dans le réservoir pour maintenir la concentration d'additif à une valeur de consigne X. Cette valeur X sera maintenue pendant un certain temps T₁ correspondant à un nombre de kilomètres effectués par le véhicule automobile ou à un nombre de litres de carburant consommés par ce véhicule. A partir de l'instant T₁, déterminé par le boîtier 24, les injections d'additif dans le réservoir seront telles que, la concentration d'additif sera maintenue à une valeur de consigne Y inférieure à X. L'instant T₀ pris comme origine sera par exemple celui de mise en service du véhicule automobile ou du filtre à particules.

La nécessité d'une telle stratégie vient du fait qu'à neuf, un filtre à particules a besoin pour fonctionner correctement de recevoir des suies fortement additivées. Par contre, ce besoin disparaît au cours du temps car les oxydes métalliques contenus dans le filtre à particules conservent une activité permettant de diminuer le dosage en additif dans le carburant du réservoir.

Pour modifier la valeur de la concentration, on a pris en compte une quantité de gazole estimée Qₓ pour effectuer Z kilomètres mais on pourrait aussi prendre en compte le temps d'ouverture de l'injecteur qui est égal à la somme des temps d'ouverture de cet injecteur depuis que le véhicule est mis en service.

Le dispositif permettant de mettre en oeuvre la stratégie représentée sur la figure 2, est décrit en regard de la figure 1.

Le boîtier 24 reçoit comme données d'entrée des signaux électriques représentatifs de la concentration en additif X dans le réservoir pendant que le véhicule automobile effectue Z kilomètres depuis l'instant initial correspondant à une quantité de gazole estimée Qₓ, ainsi qu'un signal électrique représentatif de la concentration en additif Y dans le réservoir à maintenir après que le véhicule automobile ait effectué Z kilomètres.

Lorsqu'on effectue l'ouverture du bouchon 12, préalablement au réapprovisionnement du réservoir 2 en carburant, le contacteur 25 transmet un signal électrique au boîtier 24. Ce signal électrique permet d'initialiser le boîtier électronique 24 et de déceler le début d'une opération de réapprovisionnement du réservoir 2. Le contacteur 25 qui peut être réalisé sous la forme d'un microcontact assure automatiquement l'émission d'un signal électrique qui est reçu par le boîtier 24, dès qu'une manoeuvre d'ouverture du bouchon 12 est effectuée.

La jauge de niveau 8 fournit au boîtier 24, par l'intermédiaire du câble 27, un signal continu représentatif du niveau 28 du carburant dans le réservoir 2. Ce signal continu n'est enregistré par le boîtier 24 que lorsque le signal d'initialisation provenant du contacteur 25 a été reçu par le boîtier 24.

Après l'émission du signal d'initialisation, le boîtier 24 réalise donc de manière automatique l'enregistrement d'un signal représentatif du niveau de départ du carburant dans le réservoir 2 avant le remplissage.

On effectue alors le réapprovisionnement du réservoir 2 en carburant, ce qui se traduit par une élévation du niveau 28. La jauge 8 fournit en continu au boîtier 24 un signal électrique représentatif du niveau 28 dans le réservoir 2. Ce signal électrique n'est cependant pris en compte et enregistré par le boîtier 24 que lorsque l'on réalise la fermeture du bouchon 12, ce qui se traduit par l'interruption du signal électrique provenant du contacteur 25.

Le niveau enregistré par le boîtier 24 après fermeture du bouchon 12 correspond au niveau, dans le réservoir 2, à l'issue de l'opération de remplissage.

Au redémarrage du moteur 1, le contact électrique du véhicule permet de mettre en fonctionnement le boîtier 24 pour la détermination et la réalisation de l'injection d'additif dans le réservoir de carburant 2. Le boîtier de commande 24 effectue le calcul de la quantité de carburant Qₐ introduite dans le réservoir 2 du véhicule lors du remplissage, à partir du niveau initial et du niveau final de carburant mesurés par la jauge 8 et enregistrés par le module de commande 24. Le module de commande 24 effectue alors l'addition de cette quantité de carburant Qₐ introduite et de la quantité de gazole totale Qₜ consommée par le véhicule depuis l'instant d'origine T₀. On obtient alors une nouvelle valeur de la quantité de gazole totale consommée Qₜ. Le module de commande 24 effectue ensuite une comparaison entre la quantité de gazole totale Qₜ et la quantité de gazole estimée Qₓ pour effectuer Z kilomètres, par exemple 8000 km. Tant que la valeur de Qₜ reste inférieure à la valeur de Qₓ, le module de commande 24 effectue le calcul de la quantité d'additif à introduire dans le réservoir 2 pour maintenir la concentration en additif dans ce réservoir 2 à la valeur de consigne X. Sinon, le module de commande 24 effectue un calcul similaire afin d'obtenir une nouvelle concentration d'additif dans le carburant du réservoir 2 à une valeur de consigne Y.

Des essais concluants ont été réalisés en utilisant un additif organo-métallique à base de fer appelé Ferrocene commercialisé par la société Phitocel, en prenant comme valeur de consigne X, 1200 ppm, et Y, 900 ppm, soit une valeur relative de Y par rapport à X de 75 %. D'autres valeurs relatives entre X et Y peuvent être envisagées avec d'autres additifs.

Le signal représentatif de la quantité d'additif à introduire dans le réservoir pour maintenir lesdites concentrations, est transformé en un signal de commande de la pompe d'injection 18 et en un signal de commande de l'injecteur 20.

Le signal de commande de l'injecteur 20 permet de maintenir cet injecteur ouvert pendant un temps suffisant pour réaliser l'injection de la quantité déterminée d'additif à pression constante, la pompe 18 restant en fonctionnement pendant un temps suffisant pour réaliser l'injection.

L'injection est réalisée dans la conduite de retour 7, l'additif liquide étant refoulé dans le réservoir 2, par la pompe d'injection 3, avec le débit excédentaire de gazole circulant dans la conduite 7.

A l'issue de l'injection d'additif, le gazole contenu dans le réservoir 2 présente une concentration en additif qui correspond parfaitement à la concentration correspondant à la valeur de consigne X ou Y nécessaire pour obtenir, compte tenu de l'état du filtre, une régénération et donc un fonctionnement correct du filtre à particules, sans consommation excessive d'additif, en ayant un colmatage réduit de celui-ci.

En outre, la concentration en additif du gazole dans le réservoir 2 est parfaitement homogène, du fait du brassage assuré par la pompe d'injection 3.

Le moteur 1 et le filtre à particules qui lui est associé peuvent alors fonctionner dans des conditions très satisfaisantes.

La température de l'additif injecté dans le conduit 7 et le réservoir 2 peut être réglée grâce à la jauge de température 34 et à un circuit de mise en température de l'additif dans le réservoir 14. Ou bien, la température mesurée par la jauge 34 peut être prise en compte dans le module 24 pour calculer le temps d'injection de l'additif à pression constante. En effet, le temps d'injection d'une quantité déterminée d'additif à pression constante varie en fonction de la viscosité, donc de la température de l'additif.

Le procédé suivant l'invention permet d'obtenir dans le réservoir de carburant du véhicule, des concentrations successives à des niveaux parfaitement déterminés d'additif, quelles que soient les conditions de fonctionnement du moteur.

Le filtre à particules fonctionne ainsi dans des conditions très satisfaisantes, puisque, grâce à ce système de dosage variable dans le temps, la quantité d'additif utilisée dans le carburant du véhicule est optimisée afin de retarder ou de supprimer le moment où le filtre sera colmaté par les oxydes métalliques.

Il est simplement nécessaire de maintenir un niveau suffisant d'additif dans le réservoir 14, ce qui nécessite d'effectuer un réapprovisionnement de ce réservoir, lorsque le voyant de niveau minimal s'allume.

La capacité du réservoir 14 peut être prévue pour une autonomie de 100.000 km environ. Il est à noter que l'injection d'additif est réalisée dans la partie de refoulement à basse pression du circuit de gazole, ce qui facilite cette injection.

L'invention ne se limite pas au mode de réalisation qui a été décrit.

On peut ainsi utiliser des moyens d'injection d'additif différents de ceux qui ont été décrits ; l'injection peut être effectuée par exemple directement dans le réservoir de carburant du véhicule.

Le boîtier électronique 24 permettant de mettre en mémoire la quantité de gazole estimée Qₓ pour effectuer Z kilomètres et la quantité de gazole totale Qₜ consommée par le véhicule depuis l'instant T₀ pris comme origine, d'enregistrer les mesures de niveaux et d'effectuer le calcul des quantités de carburant introduites dans le réservoir ainsi que les quantités correspondantes d'additif nécessaires pour obtenir une concentration du carburant en additif à différents niveaux successifs, peut être réalisé en utilisant tout composant ou microprocesseur et en mettant en oeuvre les connaissances habituelles des techniciens dans le domaine de l'électronique.

Les jauges ou sondes de température utilisées peuvent être de tout type adapté aux mesures effectuées et à l'environnement dans lequel se déroulent ces mesures.

La commande des opérations de mesure ou d'enregistrement du niveau du carburant dans le réservoir peut être assurée, dans le cas d'un véhicule comportant une trappe disposée dans une partie de sa carrosserie et donnant accès à des moyens de remplissage du réservoir, par les manoeuvres d'ouverture et de fermeture de la trappe qui peut être actionnée, par exemple, par un levier situé dans l'habitacle du véhicule.

La stratégie de dosage d'additif adoptée pour décrire cette invention a pris en compte deux paliers de concentration décroissante, mais on peut imaginer bien d'autres stratégies. Par exemple, on peut imaginer, lors du roulage du véhicule alors que le dosage de l'additif est réalisé à un niveau inférieur au niveau correspondant au dosage initial, un retour à un dosage plus fort et par exemple au dosage initial, pour doper la régénération lorsque le filtre est trop chargé en particules.

Le boîtier électronique 24 est ici initialisé à l'instant origine T₀ pris lors de la mise en service du véhicule mais on peut imaginer de réinitialiser ce boîtier électronique 24 lors du changement du filtre à particules.

## Revendications

1. Procédé d'introduction automatique d'un additif en quantités dosées dans le carburant d'un moteur à allumage par compression (1) d'un véhicule automobile, pour maintenir la concentration de l'additif dans le carburant à une valeur de consigne, dans lequel on fait varier au cours du temps la valeur de consigne en fonction d'au moins un paramètre représentatif de l'utilisation du véhicule depuis la date de mise en service T₀ du véhicule ou d'un filtre à particules placé sur la ligne d'échappement du moteur (1), caractérisé en ce que la valeur de consigne est fixée successivement à une première valeur (X) tant que le paramètre représentatif de l'utilisation du véhicule n'a pas franchi une valeur de seuil T₁ puis à une seconde valeur (Y) inférieure à la première valeur (X), lorsque le paramètre a franchi la valeur de seuil T₁, afin de limiter la quantité d'additifs injectés dans le carburant et d'améliorer les conditions de fonctionnement du filtre à particules.

2. Procédé selon la revendication 1, caractérisé en ce que le paramètre représentatif de l'utilisation du véhicule est constitué par l'un au moins des paramètres suivants : temps d'utilisation du véhicule, temps cumulé d'ouverture d'un injecteur, nombre total Z de kilomètres effectués par le véhicule, quantité cumulée de carburant Qₜ utilisée depuis la date de mise en service T₀ du véhicule ou du filtre à particules.

3. Procédé selon l'une quelconque des revendications 1 et 2, caractérisé en ce que la valeur de consigne est fixée à nouveau à une valeur supérieure à la seconde valeur (Y) et par exemple égale à la première valeur (X), lors du roulage du véhicule, alors que le dosage de l'additif est réalisé à la seconde valeur (Y) inférieure à la première valeur (X).

4. Procédé selon l'une quelconque des revendications 1 à 3, comprenant :
- une étape (a) de mesure du niveau initial (28) du carburant dans le réservoir de carburant (2), préalablement à chaque opération de réapprovisionnement du réservoir (2) de carburant en carburant,
- une étape (b) de mesure du niveau final (28) de carburant dans le réservoir de carburant (2), à l'issue de chacune des opérations de réapprovisionnement,
- une étape (c) de détermination de la quantité de carburant Qₐ introduite dans le réservoir de carburant (2), au cours de chacune des opérations de réapprovisionnement, à partir du niveau initial et du niveau final mesurés,
caractérisé en ce que, antérieurement à l'étape (a), on mémorise la quantité cumulée de carburant Qₜ et la quantité d'additif cumulée injectée dans le carburant depuis la mise en service du véhicule ainsi qu'une quantité de gazole Qₓ constituant la valeur de seuil T₁ pour laquelle on fait passer la valeur de consigne de la concentration d'additif dans le gazole du réservoir de carburant (2) de (X) à (Y),
et que postérieurement à l'étape (c),
- on additionne la quantité de carburant ajoutée Qₐ déterminée à l'étape (c) à celle de carburant Qₜ pour obtenir une nouvelle valeur de Qₜ,
- on détermine la valeur de consigne de la concentration d'additif dans le carburant du réservoir de carburant (2) par comparaison de Qₜ et Qₓ, ainsi que la quantité d'additif nécessaire pour obtenir cette valeur de consigne,
- on injecte dans le réservoir de carburant (2) du véhicule la quantité d'additif précédemment déterminée, de manière automatique, par l'intermédiaire d'une conduite reliant le réservoir à la partie de refoulement d'une pompe d'injection de carburant dans le moteur.

5. Utilisation d'un procédé selon l'une quelconque des revendications 1 à 4 pour l'introduction dans un réservoir à gazole (2) d'un véhicule automobile à moteur Diesel (1), d'un additif pour maintenir la concentration d'additifs dans le carburant à une valeur de consigne pour limiter la quantité d'additifs injectés dans le carburant et améliorer les conditions de fonctionnement d'un filtre à particules placé sur la ligne d'échappement du moteur.

## Patentansprüche

1. Verfahren zum automatischen Einführen eines Zusatzstoffes in dosierten Mengen in den Kraftstoff eines selbstzündenden Motors (1) für ein Kraftfahrzeug, um die Konzentration des Zusatzstoffes in dem Kraftstoff auf einem Sollwert zu halten, bei dem man im Laufe der Zeit den Sollwert als Funktion wenigstens eines Parameters ändert, der für den Gebrauch des Fahrzeuges seit dem Datum der Inbetriebnahme T₀ des Fahrzeuges oder eines Teilchenfilters, der in der Auslaßleitung des Motors (1) angeordnet ist, repräsentativ ist, dadurch gekennzeichnet, daß der Sollwert sukzessive auf einen ersten Wert (X), solange der Parameter, der für den Gebrauch des Fahrzeuges repräsentativ ist, einen Schwellenwert T₁ nicht überschreitet, dann auf einen zweiten Wert (Y), der geringer ist als der erste Wert (X), wenn der Parameter den Schwellenwert T₁ überschritten hat, festgelegt wird, um die Menge an Zusatzstoffen zu begrenzen, die in den Kraftstoff eingegeben wird, und um die Bedingungen für das Arbeiten des Teilchenfilters zu verbessern.

2. Verfahren nach Anspruch 1, dadurch gekennzeichnet, daß der Parameter, der für den Gebrauch des Fahrzeuges repräsentativ ist, aus einem wenigstens der folgenden Parameter genommen ist: Gebrauchszeit des Fahrzeugs, kumulierte Zeit der Öffnung einer Einspritzdüse, Gesamtzahl Z der von dem Fahrzeug gefahrenen Kilometer, kumulierte Menge an Kraftstoff Qₜ, der seit dem Datum der Inbetriebnahme T₀ des Fahrzeuges oder des Teilchenfilters verwendet wurde.

3. Verfahren nach einem der Ansprüche 1 und 2, dadurch gekennzeichnet, daß der Sollwert aufs neue auf einen Wert größer als der zweite Wert (Y) und beispielsweise gleich dem ersten Wert (X) festgelegt wird, beim Fahren des Fahrzeuges, während die Dosierung an Zusatzstoff bei dem zweiten Wert (Y), der geringer ist als der erste Wert (X), vorgenommen wird.

4. Verfahren nach einem der Ansprüche 1 bis 3, mit:
- einem Schritt (a) zum Messen des Anfangsstandes (28) an Kraftstoff in dem Kraftstoffbehälter (2), vor jeder Nachtankoperation des Kraftstoffbehälters (2) mit Kraftstoff,
- einem Schritt (b) zum Messen des Endstandes (28) an Kraftstoff in dem Kraftstoffbehälter (2) beim Beenden jeder der Nachtankoperationen,
- einem Schritt (c) zum Bestimmen der Kraftstoffmenge Qₐ, die in den Kraftstoffbehälter (2) während jeder der Nachtankoperationen eingefüllt worden ist, ausgehend von dem Anfangsstand und dem Endstand, die gemessen worden sind,
dadurch gekennzeichnet, daß man vor dem Schritt (a) die kumulierte Menge an Kraftstoff Qₜ und die kumulierte Menge an Zusatzstoff, die in den Kraftstoff seit der Inbetriebnahme des Fahrzeuges eingespritzt worden ist, ebenso wie eine Menge an Gasöl Qₓ, die den Schwellenwert T₁ bildet, bei dem man den Sollwert der Konzentration an Zusatzstoff in dem Gasöl des Kraftstoffbehälters (2) von (X) nach (Y) übergehen läßt, speichert,
und daß nach dem Schritt (c)
- man die Menge an zugesetztem Kraftstoff Qₐ, die in dem Schritt (c) bestimmt worden ist, zu der des Kraftstoffes Qₜ addiert, um einen neuen Wert für Qₜ zu erhalten,
- man den Sollwert der Konzentration an Zusatzstoff in dem Kraftstoff des Kraftstoffbehälters (2) durch Vergleich von Qₜ und Qₓ bestimmt, ebenso wie die Menge an Zusatzstoff, die notwendig ist, um diesen Sollwert zu erhalten,
- man in den Kraftstoffbehälter (2) des Fahrzeugs die vorangehend bestimmte Menge an Zusatzstoff in automatischer Weise einspritzt, über eine Leitung, die den Behälter mit dem Förderteil einer Einspritzpumpe für Kraftstoff in den Motor verbindet.

5. Verwendung eines Verfahrens nach einem der Ansprüche 1 bis 4 zum Einführen eines Zusatzstoffes in einen Gasölbehälter (2) eines Kraftfahrzeuges mit Dieselmotor (1), um die Konzentration an Zusatzstoffen in dem Kraftstoff auf einem Sollwert zu halten, um die Menge an Zusatzstoffen zu begrenzen, die in den Kraftstoff eingespritzt werden, und die Bedingungen für das Arbeiten eines Teilchenfilters zu verbessern, der in der Auslaßleitung des Motors angeordnet ist.

## Claims

1. Process for automatically adding metered amounts of an additive to the fuel of a compression ignition engine (1) of a motor vehicle, in order to maintain the concentration of additive in the fuel at a nominal value, wherein the nominal value is varied over time as a function of at least one parameter representing the use of the vehicle since the date T₀ of first use of the vehicle or of a particle filter fitted to the exhaust line of the engine (1), characterised in that the nominal value is fixed successively at a first value (X) as long as the parameter representing the use of the vehicle has not gone beyond a threshold value T₁ and then at a second value (Y) below the first value (X), when the parameter has exceeded the threshold value T₁, in order to limit the quantity of additives injected into the fuel and improve the operating conditions of the particle filter.

2. Process according to claim 1, characterised in that the parameter representing the use of the vehicle consists of at least one of the following parameters: duration of use of the vehicle, cumulative time of opening of an injector, total number Z of kilometres travelled by the vehicle, cumulative quantity of fuel Qₜ used since the date T₀ of first use of the vehicle or of the particle filter.

3. Process according to any one of claims 1 and 2, characterised in that the nominal value is again set at a value higher than the second value (Y) and equal, for example, to the first value (X), during travel of the vehicle, when the additive is being added in metered amounts at the second value (Y) below the first value (X).

4. Process according to any one of claims 1 to 3, comprising:
a step (a) of measuring the initial level (28) of fuel in the fuel reservoir (2), prior to each operation of refilling the fuel reservoir (2) with fuel,
a step (b) of measuring the final level (28) of fuel in the fuel reservoir (2), at the end of each of the refilling operations,
a step (c) of determining the quantity of fuel Qₐ introduced into the fuel reservoir (2), during each of the refilling operations, starting from the initial level and final level measured,
characterised in that, prior to step (a), the cumulative amount of fuel Qₜ and the cumulative amount of additive injected into the fuel since the date of first use of the vehicle and a quantity of diesel oil Qₓ constituting the threshold value T₁ for which the nominal value of the concentration of additive in the diesel oil in the fuel reservoir (2) is changed from (X) to (Y), are stored in a memory, and that, after step (c),
the quantity of added fuel Qₐ determined in step (c) is added to that of the fuel Qₜ to obtain a new value for Qₜ,
the nominal value of the concentration of additive in the fuel in the fuel reservoir (2) is determined by comparing Qₜ and Qₓ, as well as the quantity of additive needed to obtain this nominal value,
the quantity of additive determined hereinbefore is injected automatically into the fuel reservoir (2) of the vehicle, by means of a line connecting the reservoir to the delivery part of a pump for injecting fuel into the engine.

5. Use of a process according to any one of claims 1 to 4 for introducing, into a diesel oil reservoir (2) of a vehicle having a Diesel engine (1), an additive for maintaining the concentration of additives in the fuel at a nominal value so as to limit the quantity of additives injected into the fuel and improve the operating conditions of a particle filter fitted to the exhaust line of the engine.
